# EUROPEAN PATENT SPECIFICATION

(11) **EP 3 281 713 B1**
(45) Date of publication and mention of the grant of the patent: **01.05.2024**
(21) Application number: 17001354.4
(22) Date of filing: 08.08.2017
(51) Int. Cl.: B08B 3/02, B60P 3/14, E01H 1/10, B60K 25/06

(54) **VEHICLE EQUIPPED WITH ELECTRIC GENERATOR FOR SUPPLYING A CLEANING SYSTEM WITH A PUMPING UNIT WITH VARIABLE PRESSURE AND LOW FLOW RATE**
MIT ELEKTRISCHEM GENERATOR AUSGESTATTETES FAHRZEUG ZUR VERSORGUNG EINES REINIGUNGSSYSTEMS MIT EINER PUMPEINHEIT MIT VARIABLEM DRUCK UND GERINGER DURCHFLUSSRATE
VÉHICULE ÉQUIPÉ D'UN GÉNÉRATEUR ÉLECTRIQUE DESTINÉ À ALIMENTER UN SYSTÈME DE NETTOYAGE AVEC UNE UNITÉ DE POMPAGE À PRESSION VARIABLE ET À FAIBLE DÉBIT

(30) Priority: 09.08.2016 IT 201600083983
(43) Date of publication of application: 14.02.2018
(73) Proprietor: NTA Technical Solutions S.R.L., 10100 Torino (IT)
(72) Inventor: Lamesta, Gerardo, I-10121 Torino (IT)
(74) Representative: Garavelli, Paolo

(56) References cited:
- WO-A1-2006/125299
- WO-A2-2014/009983
- CN-A- 103 373 226
- JP-A- 2013 087 585
- US-A- 5 289 730
- US-A1- 2008 170 914

## Description

The present invention refers to a vehicle equipped with electric generator, for supplying a cleaning system with a pumping unit with variable pressure and low flow-rate with a rotary nozzle. Herein below, the invention will be described with reference to the supply of a system for cleaning, but it could be used, in a similarly efficient way, in similar, but also different fields, such as industrial cleanings, material removal activities, paint removals, etc. as described below.

Various cleaning systems are known in the art, which use water at a variable pressure, for example for washing piping, reactors, floors, machinery, painting plants, tanks and the like. Pumping units and systems with variable pressure available on the market have the purpose of exploiting all the power supplied by the high pressure pump, both in terms of pressure and in terms of flow-rate. Moreover, water at a variable pressure allows doing without acids or solvents for clearing, with a consequent environmental and economic benefit.

These systems, however, are not satisfactory and have among other things, the problem of having to use not very high operating pressures, included between 80 and 200 bar, and high water flow-rates, included between 30 and 90 litres per minute: such conditions put the operator responsible for cleaning in serious difficulty, since he is compelled to operate with violent water jets and scarcely controllable water drops at a variable pressure.

High pressure systems are also known, which however require the exploitation of the whole power supplied to the high pressure pump, in terms both of pressure and of flow-rate.

The Applicant of the present invention has solved the above prior art problems, by providing a system equipped with pumping unit with variable pressure and low flow-rate, which allows obtaining the following improvements:
- using the minimum water flow-rate necessary for performing industrial cleanings, material removal activities, paint removals, etc. (2-4 l/min) in order to reduce to a minimum the environmental impact, both energetic and of waste generation (contaminated water following its use);
- using a variable pressure range, such as to be able to make the pumping unit flexible regarding its operating features (from 5 to 500 bar);
- being able to be easily transported on a van or similar small and easy-to-operate means of transport;
- being able to be easily handled in its working place through the use of fixed or castor wheels;
- being able to be easily employed in its working place, namely not needing many connections for its operation.

Such system is the subject matter, among others, of patents EP-B1-2770895 and EP-B1-2893193.

Depending on the above described system, comprising tools for clearing and washing at a very high pressure and low flow-rate with rotary nozzle, there is a problem of having to satisfactorily actuate, through an electric generator, such tools and their accessories when they are operatively placed on a vehicle.

When analyzing the current state of the art of existing machines, the need emerged to become autonomous with respect to an electric generator with high power and big overall sizes, housed on transport means.

Documents JP-A-2013 087585 and WO-A1-2006/125299 disclose prior art vehicles with power-takeoffs and WO-A2-2014/009983 discloses another prior cleaning system of the same Applicant of the present invention.

Object of the present invention is solving the above prior art problems, by providing a vehicle equipped with an electric generator to supply a cleaning system, in order to have means whose total mass on the ground does not exceed 3500 kg, possibly with motoring with low environmental impact, which can also generate the necessary power to operate the tools of the above system, doing thereby without the adoption of auxiliary generators.

The above and other objects and advantages of the invention, as will result from the following description, are obtained with a vehicle equipped with an electric generator to supply a system with pumping unit with variable pressure and low flow-rate as claimed in claim 1, Preferred embodiments and non-trivial variations of the present invention are the subject matter of the dependent claims.

It is intended that all enclosed claims are an integral part of the present description.

The present invention will be better described by some preferred embodiments thereof, provided as a non-limiting example, with reference to the enclosed drawings, in which:
- Figure 1 is a schematic block diagram of a first preferred embodiment of the cleaning system of the present invention; and
- Figure 2 is a schematic block diagram of a second preferred embodiment of the cleaning system of the present invention.

With reference to the Figures, preferred embodiments of the vehicle equipped with an electric generator to supply a cleaning system of the present invention are shown and described. It will be immediately obvious that numerous variations and modifications (for example related to shape, sizes, arrangements and parts with equivalent functionality) can be made to what is described, without departing from the scope of the invention, as appears from the following claims.

Therefore, to make the inventive vehicle and to reach the above stated objects, a series of components, already available on the market, have been assembled, in order to optimize performances, overall sizes and energy and hydraulic connections.

Differently from known systems with pumping unit with variable pressure, the system supplied by the vehicle according to the present invention has the purpose of providing minimum performances to perform the workings (industrial cleanings, material removal activities, paint removals, etc.) in order to use the minimum possible amount of water and exploit the high rotation speeds of the nozzles.

In general, according to a first preferred embodiment, the vehicle of the present invention is equipped with an electric current generator 3 actuated by a gearbox power-takeoff 50 of the vehicle.

In order to test such solution, a transformation and refurbishing of an IVECO Daily 35S13V van have been performed. Such vehicle was equipped with gearbox with arrangement of a door for power-takeoff. A power-takeoff with electric connection was applied, and from this, with a cardan shaft and a belt/pulley transmission, motion has been transmitted to a generator (alternator) 3 placed in the van room. Such generator 3, manufactured by company MeccAlte of Vicenza mod. ECP 28 VL/4, is capable of delivering an apparent power of 30 kVA at 2000 revolutions of the Daily engine. The actual delivered power is function of the generator efficiency and of the power which can be taken from the vehicle power-takeoff; this prototype allows delivering about 22 kW at 2,000 RPM. The adoption of an electric panel with multi-function board completes the vehicle.

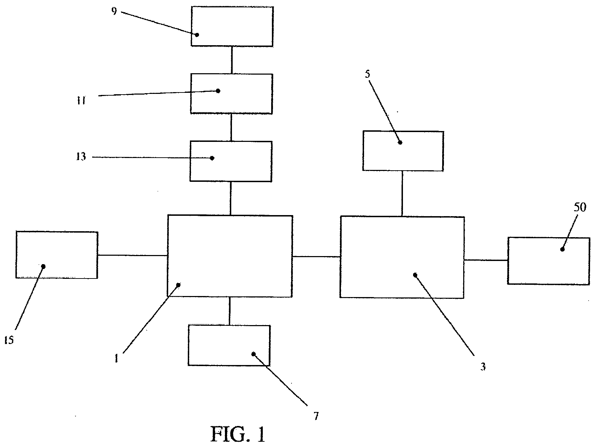

With reference to Figure 1, in its first preferred embodiment as application, the vehicle of the present invention (not shown) is further equipped with a cleaning system which substantially comprises:
- an engine (not shown);
- at least one high power pumping unit 1 adapted to pump with high output power water or other similar fluids;
- at least one of said electric current generators 3 connected to the high pressure pump 1 for its actuation, such current generator 3 being actuated by a gearbox power-takeoff 50 of the vehicle;
- at least one device 5 for regulating the revolutions of the pump 1, connected to the generator 3 for its control and for regulating the pump 1 so that it delivers water at a pressure ranging from 0 to 500 bar, and a very low flow-rate, from 2 to 4 l/min;
- at least one nozzle 15 equipped with at least one rotary head (not shown) rotated by at least one pneumatic motor (not shown); and
- at least one air compressor 7 adapted to supply the compressed supply air to the pneumatic motor.

In general, according to a second preferred embodiment, the vehicle of the present invention is equipped with:
- at least one electric current generator 3', operatively connected to a total power-takeoff 60 adapted to directly take the force from the vehicle transmission shaft; and
- an auxiliary power-takeoff 62 with double outlets connected to the total power-takeoff 60, the auxiliary power-takeoff 62 being operatively connected to the electric generator 3' at a first outlet thereof, the auxiliary power-takeoff 62 being operatively connected to a gear-type oil-dynamic pump 64 at a second outlet thereof, the gear-type oil-dynamic pump 64 being capable of supplying an hydraulic circuit which actuates the electric generator 3'.

In order to test this second embodiment, a transformation and a refurbishing of a vehicle with caisson, HEIBAO Mini Truck GT2 with double petrol/GPL supply, have been performed. Such vehicle was not equipped with an arrangement for a gearbox power-takeoff. Therefore, between gearbox and rear differential gear, a light total power-takeoff was interposed, by interrupting the vehicle transmission. This solution allows drawing about 80% of the power available at the gearbox outlet. An auxiliary power-takeoff with double outlet was then installed on the total power-takeoff. The auxiliary power-takeoff allows actuating, on the rear outlet, a gear-type oil-dynamic pump with 22 litres and 1000 revolutions capable of supplying an hydraulic circuit up to 45 litres/min at 200 bar. The front outlet of the auxiliary power-takeoff actuates a mechanical belt/pulley transmission, which in turn transmits power to an alternator produced by company MeccAlte of Vicenza mod. ECP 28 M/4, capable of delivering an apparent power of 20 kVA. This application allows delivering, with suitable selections, 16.8 kW at 2300 rpm of the vehicle engine with the third shift engaged. The selection of the electric or hydraulic power occurs before engaging the total power-takeoff and one is an alternative to the other. The adoption of an electric panel with multi-function board completes the vehicle.

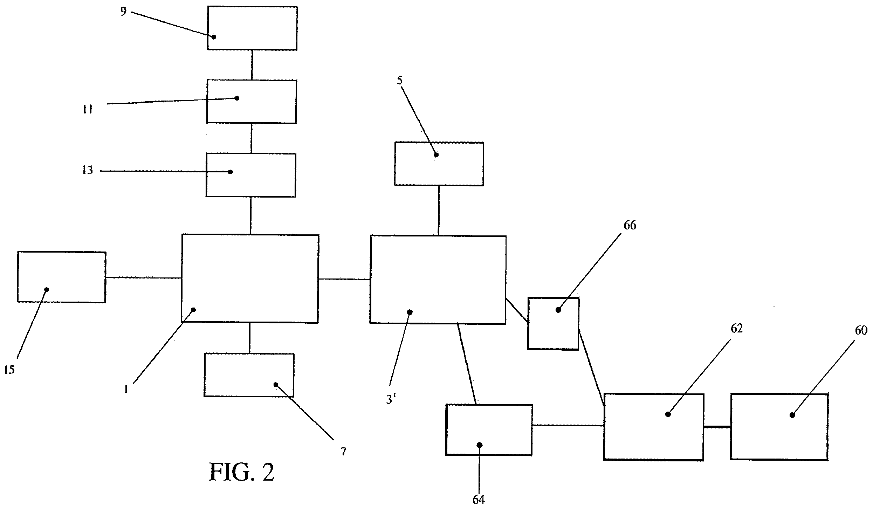

With reference to Figure 2, in its second preferred embodiment as application, the vehicle of the present invention (not shown) is equipped with a cleaning system which substantially comprises:
- an engine (not shown);
- at least one high power pumping unit 1 adapted to pump with high output power water or other similar fluids;
- at least one of said electric current generators 3' connected to the high pressure pump 1 for its actuation;
- at least one device 5 for regulating of the revolutions of the pump 1, connected to the electric generator 3' for its control and for regulating the pump 1 so that it delivers water at a pressure ranging from 0 to 500 bar, and a very low flow-rate, from 2 to 4 l/min;
- at least one nozzle 15 equipped with at least one rotary head (not shown) rotated by at least one pneumatic motor (not shown);
- at least one air compressor 7 adapted to supply the compressed supply air to the pneumatic motor;
- the total power-takeoff 60 adapted to directly take the force from the vehicle transmission shaft;
- the auxiliary power-takeoff 62 with double outlet connected to the total power-takeoff 60, the auxiliary power-takeoff 62 being operatively connected to the electric generator 3' at a first outlet thereof, the auxiliary power-takeoff 62 being operatively connected to a gear-type oil-dynamic pump 64 at a second outlet thereof, the gear-type oil-dynamic pump 64 being capable of supplying an hydraulic circuit which actuates the high power pumping unit 1 as alternative to the electric generator 3'.

According to this configuration, the selection of the electric or hydraulic power occurs, in a mutually alternative way, through the auxiliary power-takeoff 62 before engaging the total power-takeoff 60.

The above described cleaning system can further comprise at least one second nozzle (not shown) equipped with at least one rotary head rotated by the water flow going out of the nozzles.

Commonly, the above mentioned regulating device 5 is an inverter, but obviously similar devices are possible.

The above described cleaning system can further comprise at least one water filtering system 9, connected to at least one tank 11 for water, in turn connected to at least one electric booster pump 13, connected to the high pressure pump 1.

Preferably, the electric generator 3, 3' can be controlled through an electric panel which include the regulating device 5 in order to change the revolutions of the high pressure pump 1 and therefore its flow-rate, the revolutions of the generator 3, 3' being regulated by the operator depending on the pressure value to be adopted and the water consumption to be obtained.

The peculiarity of the above described pumping unit consists in making the high pressure pump 1 so that it delivers the maximum possible pressure with a very low flow-rate and with reduced sizes, solution which can be obtained by using the inverter 5 connected to the electric generator 3, 3', also having small sizes.

As one of the possible operating variations, the above described system with pumping unit can be installed on a van (not shown) dedicated to the system itself, namely equipped with an electric supply source and with an accumulating tank in order to guarantee some hours of autonomous operation.

The above-described system thereby allows obtaining the following results:
- compactness: the sizes are such as to allow the system to pass through normal doors
- light weight: the weight is reduced to a maximum, in order to be able to be transported on a van
- absence of vibrations: the assembly structure is made in order to reduce the motor and pump vibrations to a minimum and the rubber wheels do not transmit the possible vibrations on the ground
- mobility: the assembly is equipped with steering wheels that allow its movements through a person's thrust
- minimum supply couplings: the assembly has to be supplied with water and three-phase and single-phase electric energy, in order to reduce to a minimum the necessary couplings (air compressor, pump booster and water-filtering system are integrated in the assembly)
- working flexibility: the pressure adjustable from 0 to 500 bar makes this assembly unique in the current high pressure field and allows a high working flexibility, allowing to perform several works
- low flow-rate: the low water flow-rate used (from 2 to 4 l/min) allows minimising the ecologic impact and reducing the waste of necessary water for performing the works
- no wastes: there are no water wastes during the use, since unused water is made re-circulate in the accumulating tank integrated in the assembly
- low energetic impact: the use of a high-efficiency electric motor, together with the latest generation speed-changing device, allows good energy savings during its use
- easy adjustments: the electric panel is equipped with all necessary warning lights for the correct operation of the unit; moreover, there is a panel for managing the speed-changing device, in order to provide all information about the operation in a simple and immediate way
- exclusive accessories: in order to manage the low water flow-rate being generated, an exclusive nozzle is used, which is able to operate till 500 bar.

With the inventive system, the following can for example be easily removed: graffiti on walls, chewing gums on the ground, debris from tramway tracks and the like; other application fields of such system are, as a non-limiting example:
- in the building sector, as hydro-demolition, concrete cutting and scarification, removal of deteriorated coatings, surface cleaning of containing basins and cleaning of facades and flooring;
- in the environmental sector, as cleaning of tanks, filter-presses, cold-cutting of tanks (hydro-cutting) and decontamination and cleaning of industrial plants; and
- in the industrial sector, as cleaning of painting cabins and ovens and cleaning of plants and machinery.

## Claims

1. Vehicle of the van type **characterized in that** it is equipped an electric current generator (3, 3') to supply a system for cleaning, a total mass on the ground of said electric current generator (3, 3') and said system for cleaning being not exceeding 3500 kg, said vehicle being equipped with:
- an engine;
- at least one of said electric current generators (3, 3') actuated by a gearbox power-takeoff (50) of the vehicle, said power-takeoff (50) being equipped with an electric connection, said power-takeoff (50) transmitting motion, with a cardan shaft and a belt/pulley transmission, to an alternator placed in a vehicle room, said generator (3, 3') being capable of delivering an apparent power of 30 kVA at 2,000 revolutions of the vehicle engine; and
- said system for cleaning, which comprises:
- at least one high power pumping unit (1) adapted to pump with high output power water or other similar fluids;
- at least one of said electric current generators (3, 3') connected to the high pressure pump (1) for its actuation;
- at least one device (5) for regulating the revolutions of the pump (1), connected to the generator (3, 3') for its control and for regulating the pump (1) so that it delivers water at a pressure ranging from 0 to 500 bar, and a very low flow-rate, from 2 to 4 l/min;
- at least one nozzle (15) equipped with at least one rotary head rotated by at least one pneumatic motor; and
- at least one air compressor (7) adapted to supply the compressed supply air to said pneumatic motor.

2. Vehicle according to claim 1, **characterized in that** said electric current generator (3, 3') is operatively connected to a total power-takeoff (60) adapted to directly take the force from the vehicle transmission shaft;
and **in that** the vehicle further comprises:
- an auxiliary power-takeoff (62) with double outlet connected to said total power-takeoff (60), said auxiliary power-takeoff (62) being operatively connected to said electric generator (3') at a first outlet thereof, said auxiliary power-takeoff (62) being operatively connected to a gear-type oil-dynamic pump (64) at a second outlet thereof, said gear-type oil-dynamic pump (64) being capable of supplying an hydraulic circuit which actuates said electric generator (3'), wherein a front outlet of the auxiliary power-takeoff (62) is designed to actuate, on the rear outlet, a gear-type oil dynamic pump with 22 litres and 1000 revolutions capable of supplying an hydraulic circuit up to 45 litres/min at 200 bars, the frount outlet being designed to actuate a mechanical belt/pulley transmission, which in turn transmits power to an alternator placed in a vehicle room and capable of delivering an apparent power of 20kVa, a light total power-takeoff being interposed between gearbox and rear differential gear, by interrupting the vehicle transmission, an auxiliary power-takeoff with double outlet being installed on the total power-takeoff.

3. Vehicle according to claim 2, **characterized in that** the selection of the electric or hydraulic power occurs, in a mutually alternative way, through said auxiliary power-takeoff (62) before engaging said total power-takeoff (60).

4. Vehicle according to any one of the previous claims, **characterized in that** it comprises at least one second nozzle equipped with at least one rotary head rotated by the water flow going out of the nozzles, and **in that** said regulating device (5) is an inverter.

5. Vehicle according to any one of the previous claims, **characterized in that** it further comprises at least one system (9) for filtering water, connected to at least one tank (11) for water, in turn connected to at least one electric booster pump (13), connected to the high pressure pump (1).

6. Vehicle according to any one of the previous claims, **characterized in that** the electric generator (3, 3') is controlled through an electric panel which includes the regulating device (5) in order to change the revolutions of the high pressure pump (1) and therefore its flow-rate, the revolutions of the generator (3, 3') being regulated by an operator depending on the pressure value to be adopted and the water consumption to be obtained.

## Patentansprüche

1. Fahrzeug vom Van-Typ, **dadurch gekennzeichnet, dass** es mit einem elektrischen Stromgenerator (3, 3') ausgestattet ist, um ein Reinigungssystem anzutreiben, wobei die Gesamtmasse des elektrischen Stromgenerators (3, 3') und des Reinigungssystems am Boden nicht größer ist 3500 kg, das Fahrzeug ist ausgestattet mit:
- ein Motor;
- mindestens einer der Stromgeneratoren (3, 3'), der von einem Nebenantrieb am Getriebe (50) des Fahrzeugs angetrieben wird, wobei der Nebenantrieb (50) mit einer elektrischen Kupplung ausgestattet ist, der Nebenantrieb (50), der die Bewegung über eine Kardanwelle und eine Riemen-/Riemenscheibenübertragung auf einen in einem Raum des Fahrzeugs positionierten Wechselstromgenerator (Generator (3, 3')) überträgt, der in der Lage ist, eine Scheinleistung von 30 kVA zu liefern 2000 U/min des Motors des Fahrzeugs; und
- besagtes Reinigungssystem, das Folgendes umfasst:
- mindestens eine Hochdruckpumpeinheit (1), die zum Pumpen von Wasser oder anderen ähnlichen Flüssigkeiten mit hohem Ausgangsdruck geeignet ist;
- mindestens einer der Stromgeneratoren (3), der zu seinem Betrieb mit der Hochdruckpumpe (1) verbunden ist;
- mindestens eine Vorrichtung (5) zur Drehzahlregelung der Pumpe (1), die mit dem Generator (3) zu dessen Steuerung und Regelung der Pumpe (1) verbunden ist, so dass diese Wasser mit einem Druck von 0 abgibt bis 500 bar und eine sehr niedrige Durchflussrate von 2 bis 4 l/min;
- mindestens eine Düse (15), die mit mindestens einem rotierenden Kopf ausgestattet ist, der von mindestens einem pneumatischen Motor gedreht wird; und
- mindestens einen Luftkompressor (7), der den Druckluftmotor mit Druckluft versorgen kann.

2. Fahrzeug nach Anspruch 1, **dadurch gekennzeichnet, dass** der Stromgenerator (3, 3') betriebsmäßig mit einem Nebenabtrieb (60) verbunden ist, der dazu geeignet ist, Leistung direkt von der Getriebewelle des Fahrzeugs zu beziehen;
und dadurch, dass das Fahrzeug außerdem Folgendes umfasst:
- einen Hilfsabtrieb (62) mit doppeltem Ausgang, der mit dem Gesamtabtrieb (60) verbunden ist, wobei der Hilfsabtrieb (62) mit einem seiner ersten betriebsmäßig mit dem elektrischen Generator (3') verbunden ist Ausgänge, wobei die Hilfsenergie (62) an ihrem zweiten Ausgang betriebsmäßig mit einer hydraulischen Zahnradpumpe (64) verbunden ist, wobei die hydraulische Zahnradpumpe (64) in der Lage ist, einen hydraulischen Kreislauf zu versorgen, der den elektrischen Generator (3') antreibt wobei ein vorderer Ausgang des Nebenabtriebs (62) dafür ausgelegt ist, am hinteren Ausgang eine hydraulische Zahnradpumpe mit 22 Litern und 1000 U/min anzutreiben, die einen Hydraulikkreislauf mit bis zu 45 Litem/min bei 200 bar versorgen kann, wobei der vordere Ausgang für den Antrieb eines mechanischen Riemen-/Riemenscheibengetriebes ausgelegt ist, das wiederum Kraft an einen Generator überträgt, der sich in einem Raum des Fahrzeugs befindet und eine Scheinleistung von 20 kVa liefern kann, wobei dazwischen ein leichter Gesamtzapfwellenantrieb angeordnet ist Unterbricht das Getriebe und das Hinterachsdifferenzial die Kraftübertragung des Fahrzeugs, ist an der Gesamtzapfwelle ein Hilfszapfwellenabtrieb mit doppeltem Abtrieb angebracht.

3. Fahrzeug nach Anspruch 2, **dadurch gekennzeichnet, dass** die Auswahl der elektrischen oder hydraulischen Leistung abwechselnd über den Nebenabtrieb (62) vor dem Zuschalten des Gesamtabtriebs (60) erfolgt.

4. Fahrzeug nach einem der vorhergehenden Ansprüche, **dadurch gekennzeichnet, dass** es mindestens eine zweite Düse umfasst, die mit mindestens einem rotierenden Kopf ausgestattet ist, der durch den aus den Düsen austretenden Wasserstrom gedreht wird, und durch die Tatsache, dass die Regulierungsvorrichtung (5) ist ein Wechselrichter.

5. Fahrzeug nach einem der vorhergehenden Ansprüche, **dadurch gekennzeichnet, dass** es außerdem mindestens ein Wasserfiltersystem (9) umfasst, das mit mindestens einem Wassertank (11) und wiederum mit mindestens einer elektrischen Druckerhöhungspumpe (13) verbunden ist, angeschlossen an die Hochdruckpumpe (1).

6. Fahrzeug nach einem der vorhergehenden Ansprüche, **dadurch gekennzeichnet, dass** der elektrische Generator (3, 3') über eine Schalttafel gesteuert wird, die die Einstellvorrichtung (5) zum Zweck der Änderung der Drehzahl der Hochdruckpumpe enthält (1) und damit seine Durchflussmenge, wobei die Generatorumdrehungen (3, 3') vom Bediener entsprechend dem einzustellenden Druckwert und dem zu erzielenden Wasserverbrauch reguliert werden.

## Revendications

1. Véhicule de type fourgon **caractérisé en ce qu'**il est équipé d'un générateur de courant électrique (3, 3') pour alimenter un système de nettoyage, une masse totale au sol dudit générateur de courant électrique (3, 3') et dudit système de nettoyage n'excédant pas 3500 kg, ledit véhicule étant équipé de:
- un moteur;
- au moins un desdits générateurs de courant électrique (3, 3') entraîné par une prise de mouvement au niveau de la boîte de vitesses (50) du véhicule, ladite prise de mouvement (50) étant équipée d'un accouplement électrique, ladite prise de mouvement (50) transmettant le mouvement, avec un arbre à cardan et une transmission courroie/poulie, à un alternateur positionné dans un compartiment du véhicule, appelé générateur (3, 3') pouvant délivrer une puissance apparente de 30 kVA à 2000 tr/min du moteur du véhicule ; et
- ledit système de nettoyage, qui comprend:
- au moins une unité de pompage haute pression (1) adaptée au pompage d'eau ou d'autres fluides similaires avec une pression de sortie élevée;
- au moins un desdits générateurs de courant électrique (3) connecté à la pompe haute pression (1) pour son fonctionnement;
- au moins un dispositif (5) de régulation de la vitesse de la pompe (1), relié au générateur (3) pour son contrôle et pour la régulation de la pompe (1) pour qu'elle refoule de l'eau à une pression variable de 0 à 500 bar, et un débit très faible, de 2 à 4 l/min;
- au moins une buse (15) équipée d'au moins une tête rotative entraînée en rotation par au moins un moteur pneumatique; et
- au moins un compresseur d'air (7) capable de fournir l'alimentation en air comprimé audit moteur pneumatique.

2. Véhicule selon la revendication 1, **caractérisé par le fait que** ledit générateur de courant électrique (3, 3') est relié fonctionnellement à une prise de mouvement totale (60) adaptée pour prélever de la puissance directement sur l'arbre de transmission du véhicule;
et **par le fait que** le véhicule comprend également :
- une prise de mouvement auxiliaire (62) à double sortie reliée à ladite prise de mouvement totale (60), ladite prise de mouvement auxiliaire (62) étant reliée fonctionnellement audit générateur électrique (3') à l'un de ses premiers sorties, ladite puissance auxiliaire (62) étant connectée opérationnellement à une pompe hydraulique à engrenages (64) à sa deuxième sortie, ladite pompe hydraulique à engrenages (64) étant capable d'alimenter un circuit hydraulique qui entraîne ledit générateur électrique (3'), en dont une sortie avant de la prise de mouvement auxiliaire (62) est conçue pour entraîner, sur la sortie arrière, une pompe hydraulique à engrenages de 22 litres et 1000 tr/min capable d'alimenter un circuit hydraulique jusqu'à 45 litres/min à 200 bar, la sortie avant étant destinée à entraîner une transmission mécanique courroie/poulie, qui transmet à son tour la puissance à un alternateur situé dans un espace du véhicule et capable de fournir une puissance apparente de 20kVa, une prise de force totale légère étant placée entre la boîte de vitesses et le différentiel arrière, interrompant la transmission du véhicule, une prise de mouvement auxiliaire à double sortie est installée sur la prise de mouvement totale.

3. Véhicule selon la revendication 2, **caractérisé par le fait que** la sélection de puissance électrique ou hydraulique s'effectue, de manière mutuellement alternative, via ladite prise de force auxiliaire (62) avant l'engagement de ladite prise de force totale (60).

4. Véhicule selon l'une quelconque des revendications précédentes, **caractérisé par le fait qu'**il comprend au moins une deuxième buse équipée d'au moins une tête rotative entraînée en rotation par le flux d'eau sortant des buses, et **par le fait que** ledit dispositif de régulation (5) est un onduleur.

5. Véhicule selon l'une quelconque des revendications précédentes, **caractérisé en ce qu'**il comprend en outre au moins un système de filtration d'eau (9), relié à au moins un réservoir d'eau (11), lui-même relié à au moins une pompe de gavage électrique (13), relié à la pompe haute pression (1).

6. Véhicule selon l'une quelconque des revendications précédentes, **caractérisé en ce que** le générateur électrique (3, 3') est commandé via un tableau électrique qui comprend le dispositif de réglage (5) en vue de faire varier les tours de la pompe haute pression (1) et donc son débit, les tours du générateur (3, 3') étant réglés par l'exploitant en fonction de la valeur de pression à adopter et de la consommation d'eau à obtenir.
